# EUROPÄISCHE PATENTSCHRIFT

(11) **EP 2 306 875 B1**
(45) Veröffentlichungstag und Bekanntmachung des Hinweises auf die Patenterteilung: **08.09.2021**
(21) Anmeldenummer: 09781187.1
(22) Anmeldetag: 28.07.2009
(51) Int. Cl.: A47J 43/07

(54) **DREHANTREIBBARES SCHNEIDMESSER, HERSTELLVERFAHREN UND KÜCHENGERÄT**
ROTATABLE CUTTING BLADE , PRODUCTION METHOD AND KITCHEN APPLIANCE
COUTEAU POUVANT ÊTRE ENTRAÎNÉ EN ROTATION, PROCÉDÉ DE FABRICATION ET APPAREIL DE CUISINE

(30) Priorität: 01.08.2008 DE 102008035981
(43) Veröffentlichungstag der Anmeldung: 13.04.2011
(73) Patentinhaber: BSH Hausgeräte GmbH, 81739 München (DE)
(72) Erfinder: CATER, Matej, 3301 Petrovce (SI); SEMEJA, Uros, 3327 Smartno ob Paki (SI); DANIJEL, Roman, 3312 Ljubno (SI)
(86) Internationale Anmeldenummer: PCT/EP2009/059739
(87) Internationale Veröffentlichungsnummer: WO 2010/012729

(56) Entgegenhaltungen:
- EP-A1- 0 724 857
- EP-A2- 1 982 624
- DE-A1- 4 414 822
- DE-B- 1 055 772
- DE-B- 1 174 949
- GB-A- 258 142
- JP-A- 2005 052 512
- US-A- 3 036 614

## Beschreibung

### Hintergrund der Erfindung

Die Erfindung betrifft ein Verfahren zur Herstellung eines drehantreibbaren Schneidmessers eines Stabmixers.

### Stand der Technik

Ein rotierendes Schneidmesser der eingangs genannten Art sowie ein Verfahren zu seiner Herstellung sind aus der deutschen Offenlegungsschrift DE 195 03 491 A1 bekannt.

Das Schneidmesser besteht aus einem mit der Antriebswelle des Küchengeräts formschlüssig verbindbaren Mittelteil, von dem aus sich einander diametral entgegen gerichtet zwei Tragarme radial nach außen erstrecken. Jeder dieser Tragarme weist an seinem äußeren Ende eine winkelförmige Ausbildung mit einem langen und einem kurzen Schenkel auf, welche messerartig angeschliffen sind. Im Bereich der Schenkel ist das Schneidmesser ferner mit einer dreidimensionalen Verprägung versehen, so dass die einander gegenüberliegenden Schneidkanten in unterschiedlichen Ebenen verlaufen.

Bei der Herstellung dieses vorbekannten Schneidmessers wird zunächst ein Rohling aus einem dünnen, korrosionsfesten Edelstahlblech herausgestanzt. Dabei können in einem Arbeitsschritt auch die dreidimensionalen Verprägungen im Bereich der Schneidkanten erzeugt werden. Im Anschluss daran werden in einem gesonderten Prozess die als Schneidkanten vorgesehenen Bereiche der Schenkel angeschliffen.

Ein solches Vorgehen ist zur Fertigung von Schneidmessern grundsätzlich gut geeignet. Der nachträglich durchgeführte Schleifprozess an dem bereits aus dem Halbzeug gestanzten Rohling erfordert jedoch eine relativ aufwendige Handhabung und verlängert die Fertigungszeit.

Aus anderen Anwendungen ist ferner bekannt, Messerschneiden durch Schleifen der Kanten eines Halbzeugs vor dem Trennen der einzelnen Schneidmesser auszubilden.

So wird in der Patentschrift DE 37 34 641 C1 ein Verfahren zur Herstellung eines Schälmessers zum Schälen von Gemüse oder dergleichen offenbart, bei welchem ein beidseitig geschärfter Bandstahl einer Bearbeitungseinrichtung getaktet zugeführt wird. In dieser werden zunächst Trennkerben für die spätere Trennung der einzelnen Schälmesser und deren Mittelbereich ausgestanzt. Die äußeren, geschärften Kanten des derart vorbereiteten Halbzeugs werden nachfolgend nach innen überbogen und die Brückenabschnitte nach dem Trennen der Schälmesser gewölbt.

In den Patentschriften GB 258,142, GB 282,478 und US 1,486,317 werden Fertigungsverfahren für Rasiermesser beschrieben, bei welchen ein Bandstahl zunächst partiell gestanzt wird, ohne dass eine Trennung der einzelnen Messer erfolgt. Nachfolgend werden die verbleibenden Längskanten des Bandstahls geschliffen und die Messer anschließend herausgetrennt.

Aus dem Patent US 3,036,614 ist ein Schneid- und Mixmesser bekannt, dass in einem Mixer rotierend angetrieben werden kann und die Form eines Parallelogramms hat. Dabei sind gegenüberliegende gerade Seiten mit geschärften Schneidkanten versehen. Das Schneidmesser wird aus einem Blech ausgestanzt und sodann werden die Kanten geschliffen. Neben der Parallelogrammform ist auch ein durch gerundete Kanten davon leicht abweichende Form offenbart.

Die europäische Offenlegungsschrift EP 0 724 857 A1 offenbart ein Schneidmesser für einen elektrisch betriebenen Stabmixer, wobei die Messertragarme an einer freien Kante jeweils eine Messerschneide mit Schneidkante aufweisen. Dabei ist die Messerschneide eines ersten Tragarms nach oben und die Messerschneide eines zweiten Tragarms nach unten gerichtet, was zusammen mit Abschrägflächen zu einem besonders guten Schneid- und Mischeffekt mit einer leichteren Handhabung des Stabmixers führen soll.

Die Patentschrift US 258,142 offenbart ein Herstellungsverfahren für Rasierklingen, bei denen ein Materialstreifen in der Breite der Rasierklingen zunächst an seinen Seiten geschliffen wird, bevor er zu einzelnen Rasierklingen vereinzelt wird. Die geschliffenen Kanten bilden dann die Schneidkanten der Rasierklingen.

Keine dieser Druckschriften offenbart eine technische Lehre, welche unmittelbar auf drehantreibbare Schneidmesser anwendbar ist, da diese hinsichtlich Funktion und Gestalt von Schäl- und Rasiermessern wesentlich abweichen.

### Der Erfindung zugrundeliegende Aufgabe

Der Erfindung liegt die Aufgabe zugrunde, ein gattungsgemäßes Schneidmesser mit hoher Qualität in besonders rationeller Weise zu fertigen.

### Erfindungsgemäße Lösung

Die der Erfindung zugrunde liegende Aufgabe wird bei einem drehantreibbaren Schneidmesser der eingangs genannten Art dadurch gelöst, dass die Messerschneide durch eine geschärfte Kante des zur Fertigung des Schneidmessers verwendeten Halbzeugs gebildet ist. Hinsichtlich eines gattungsgemäßen Verfahrens erfolgt die Lösung der Aufgabe durch die Merkmale des Anspruchs 1.

Durch diese Ausbildung und dieses Vorgehen wird die Fertigung drehantreibbarer Schneidmesser erheblich vereinfacht, da das Schärfen der Messerschneiden zu einem Zeitpunkt erfolgt, an welchem die Schneidmesser noch nicht aus dem Halbzeug herausgetrennt wurden. Es ist somit nicht erforderlich, beim Schärfprozess eine Vielzahl von Einzelteilen zu handhaben. Vielmehr kann dieser noch an dem mehrere Schneidmesser umfassenden Halbzeug erfolgen. Darüber hinaus wird durch die kontinuierliche Materialzufuhr die Qualität der Messerschneiden deutlich verbessert, da die Ausrichtung der betreffenden Kanten relativ zu den schärfenden Werkzeugen wesentlich vereinfacht wird. Falls dieses erforderlich ist, kann auch eine Wärmebehandlung problemlos in diesen Prozess eingebunden werden. Die besonders präzise gefertigten Messerschneiden sind insbesondere zum Zerschneiden des Bearbeitungsguts vorgesehen.

Grundsätzlich ist es dabei möglich, vor dem Schärfen der Kanten bereits andere Bearbeitungen an dem Halbzeug vorzunehmen. Besonders vorteilhaft ist jedoch, wenn die Kantenbearbeitung vorab erfolgt, also bereits am angelieferten Halbzeug vorliegt oder aber als erster Bearbeitungsschritt bei der Schneidmesserfertigung vorgenommen wird.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Mit Vorteil sind die Messerschneiden zumindest bereichsweise, vorzugsweise jedoch in ganzer Länge geradlinig ausgeführt, so dass eine Bearbeitung des betreffenden, gleichfalls mit geradlinig verlaufenden Kanten versehenen Halbzeugs besonders einfach ist und/oder die vorgeschärfte Kante nicht mehr nachträglich verformt wird. Das Heraustrennen des Schneidmessers aus dem Halbzeug kann grundsätzlich durch jedes hierzu geeignete Verfahren erfolgen, beispielsweise auch durch Laser- oder Wasserstrahlschneiden. Da die erfindungsgemäßen Schneidmesser üblicherweise in großen Stückzahlen gefertigt werden, erfolgt das Trennen jedoch mit besonderem Vorteil durch Stanzen der Schneidmesser.

Gemäß der Erfindung weist das Schneidmesser zwei oder mehr mit derartigen Messerschneiden versehene erste Tragarme auf, die sich von der Mitte des Schneidmessers weg erstrecken. Besonders bevorzugt sind zwei einander gegenüberliegend sich von der Mitte des Schneidmessers weg erstrecke Tragarme. Diese Anordnung hat sich insbesondere bei der Verwendung an hochtourig drehenden Stabmixern wegen des weitgehend unwuchtfreien Betriebs bewährt. Die ersten Tragarme sind dabei vorzugsweise winkelförmig ausgebildet und weisen jeweils einen radial inneren Schenkel und einen radial äußeren Schenkel auf, wobei jeder Tragarm mit Vorteil radial innen mit einem kurzen Schenkel und radial außen mit einen langem Schenkel versehen ist. Der innere Schenkel und die radial außenliegende Kante des äußeren Schenkels schließen beispielsweise einen Winkel α von 90° bis 130°, insbesondere etwa 110°, ein. Die geschärfte Kante oder die geschärften Kanten der Messerschneide haben vorzugsweise eine Stärke von weniger als 0,2 Millimeter, besonders vorzugsweise weniger als 0,15 Millimeter, besonders vorzugsweise 0,1 Millimeter oder weniger.

Die Messerschneiden sind bevorzugt an den radial äußeren Schenkeln ausgebildet, wobei die Anordnung so vorgesehen ist, dass bei Rotation des Schneidmessers die in das Bearbeitungsgut eindringenden Bereiche der äußeren Schenkel geschärft sind. Sie können insbesondere von zueinander parallel verlaufenden, vorgeschärften Kanten des Halbzeugs gebildet werden und sind, sofern sie im Zuge der nachfolgenden Fertigung nicht verformt werden, gleichfalls zueinander parallel. Die Schärfung der parallel verlaufenden Kanten des Halbezeugs kann gleichzeitig mit einander gegenüberliegenden Werkzeugen erfolgen, so dass einerseits der Raumbedarf der hierzu erforderlichen Einrichtung besonders gering ist und sich andererseits die dabei auf das Halbzeug wirkenden Kräfte zumindest teilweise ausgleichen.

Nach einer weiteren bevorzugten Ausführung der Erfindung weist das Schneidmesser mindestens einen, vorzugsweise zwei oder mehr zweite Tragarme auf. Besonders bevorzugt sind zwei zweite Tragarme, die sich einander gegenüberliegend von der Mitte des Schneidmesser weg erstrecken und gegenüber den ersten Tragarmen um einen Winkel versetzt am Schneidmesser angeordnet sind. Die zweiten Tragarme schließen mit den inneren Schenkeln der ersten Tragarme zum Beispiel einen Winkel β von 80° bis 100°, insbesondere etwa 90°, ein. Diese Bereiche des Schneidmessers sind insbesondere zum Zerhacken des Bearbeitungsguts vorgesehen.

Zur Vereinfachung der Herstellung ist dabei vorzugsweise vorgesehen, dass sich der oder die zweiten Tragarme im Wesentlichen linear erstrecken, wobei die radiale Erstreckung der zweiten Tragarme zur Verringerung des bei Einsatz des Schneidmessers erforderlichen Drehmoments bevorzugt geringer als die radiale Erstreckung der ersten Tragarme ist.

Der oder die zweiten Tragarme sind mit besonderem Vorteil mit Schneidkanten ausgestattet, die vorzugsweise durch plastisches Verformen gebildet sind. Durch die Erfindung ist erreichbar, dass die Schneidkanten nicht geschliffen sind, vorzugsweise sogar auf jegliches Spannen zum Bilden der Schneidkanten verzichtet werden kann. Diese Ausführung der Erfindung nutzt aus, dass an die Schärfe dieser Schneidkanten geringere Anforderungen gestellt werden können als an die Qualität der zuvor beschriebenen Messerschneiden. Insbesondere können die Schneidkanten beim Heraustrennen des Schneidmessers aus dem Halbzeug durch plastische Verformung des Werkstoffs ausgebildet werden. Die Schneidkante oder Schneidkanten haben vorzugsweise eine Stärke von mehr als 0,1 Millimeter, besonders vorzugsweise mehr als 0,15 Millimeter, besonders vorzugsweise mehr als 0,2 Millimeter, z.B. zwischen 0,2 und 0,25 Millimeter.

Um die Eigenschaften des Schneidmessers hinsichtlich des Zerhackens des Bearbeitungsguts besonders günstig zu gestalten, werden die zweiten Tragarme nach einer weiteren vorteilhaften Ausführung der Erfindung vorzugsweise gegenüber der von den ersten Tragarmen gebildeten Hauptebene des Schneidmessers geneigt anordnet, ragen also aus der Hauptebene heraus. Mit dieser Ausführung der Erfindung ist erreichbar, dass sie das von den Messerschneiden der ersten Tragarme geteilte Bearbeitungsgut erfassen und zerhacken.

Dies kann dann besonders effizient erfolgen, wenn einer der zweiten Tragarme gegenüber der Hauptebene nach unten und der gegenüberliegende zweite Tragarm gegenüber der Hauptebene nach oben geneigt ausgerichtet ist, beispielsweise um einen Winkel von 15° bis 25°, insbesondere etwa 20°. Die Hackwirkung tritt somit oberhalb und unterhalb der Hauptebene des Schneidmessers auf. Die Richtungsangaben beziehen sich auf die übliche, horizontale Gebrauchsstellung des Schneidmessers.

Das erfindungsgemäße Verfahren ist dann besonders einfach und kostengünstig durchzuführen, wenn zur Herstellung des Schneidmessers ein flächiges Halbzeug, beispielsweise ein korrosionsfestes Edelstahlblech mit einer Dicke von 0,6 mm bis 1,0 mm, insbesondere etwa 0,75 mm, verwendet wird. Mit besonderem Vorteil ist das Halbzeug dabei streifenartig ausgebildet und kann somit in gewickelter Form (Coil) angeliefert werden. Bei der Herstellung der Schneidmesser kann der Streifen dann kontinuierlich vom Coil abgezogen werden. Hierbei ist vorzugsweise vorgesehen, dass mindesten eine, sich in Streifenlängsrichtung erstreckenden Kanten des Halbzeugs, vorzugsweise beide einander gegenüberliegenden Kanten, vor dem Trennen der Schneidmesser messerartig geschärft werden, wobei die Breite des Streifens dem Abstand der zueinander parallel verlaufenden Messerschneiden an den ersten Tragarmen entsprechen kann.

Die messerartige Schärfung erfolgt durch Schleifen der Kanten des Halbzeugs, da dieses Vorgehen zu einer besonders hohen Güte der Messerschneiden führt.

Das Trennen des Schneidmessers aus dem Halbzeug erfolgt vorzugsweise durch einen Stanzprozess, wobei gleichzeitig durch ein entsprechend ausgebildetes Stanzwerkzeug bereichsweise ein Verprägen hervorgerufen werden kann. Durch dieses Verprägen können beispielsweise die Schneidkanten an den zweiten Tragarmen des Schneidwerkzeugs ausgebildet werden.

### Kurzbeschreibung der Figuren

Die Erfindung wird im Folgenden anhand schematischer Zeichnungen an einem Ausführungsbeispiel mit weiteren Einzelheiten näher erläutert.

Es zeigen:
- Fig. 1:: eine perspektivische Ansicht eines mit einem erfindungsgemäßen Schneidmesser ausgestatteten Küchengeräts am Beispiel eines Stabmixers;
- Fig. 2:: eine seitliche Ansicht (Fig. 2a) und eine Aufsicht eines erfindungsgemäß ausgebildeten Schneidmessers;
- Fig. 3:: das Schneidmesser nach Fig. 2 in einer perspektivischen Ansicht;
- Fig. 4:: die Anwendung des erfindungsgemäßen Verfahrens in unterschiedlichen Verfahrensstadien.

### Ausführliche Beschreibung der Erfindung anhand eines Ausführungsbeispiels

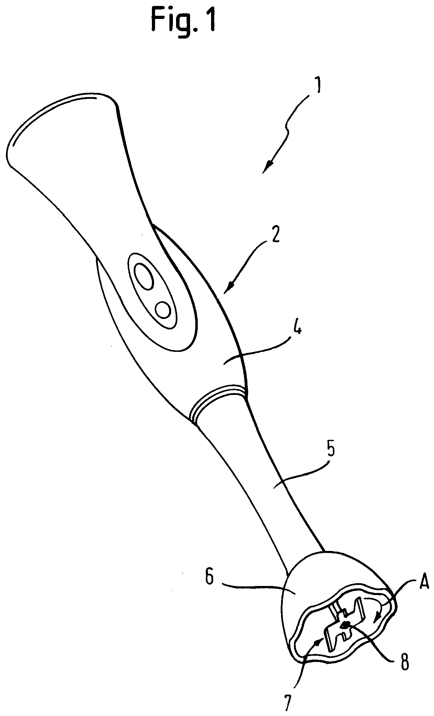

Das in Fig. 1 dargestellte Küchengerät 1 in Form eines Stabmixers 2 besteht aus einem den elektrischen Antrieb, Bedienelemente 3 sowie vorzugsweise einen Akkumulator aufnehmenden Gehäuse 4, an welches ein Werkzeug 5 lösbar gekoppelt ist. Das Werkzeug 5 ist an seinem dem Gehäuse 4 abgewandten Ende mit einem glockenartigen Werkzeugkopf 6 versehen, in welchen ein Schneidmesser 7 eingesetzt ist. Das Schneidmesser 7 ist mittels einer im Werkzeug 5 angeordneten Antriebswelle und eine im Übergangsbereich zwischen Werkzeug 5 und Gehäuse 4 befindlichen Kupplungseinrichtung mit dem elektrischen Antrieb des Stabmixers 2 drehfest verbunden und kann von diesem um eine Achse 8 in Richtung des Pfeils A in Drehung versetzt werden.

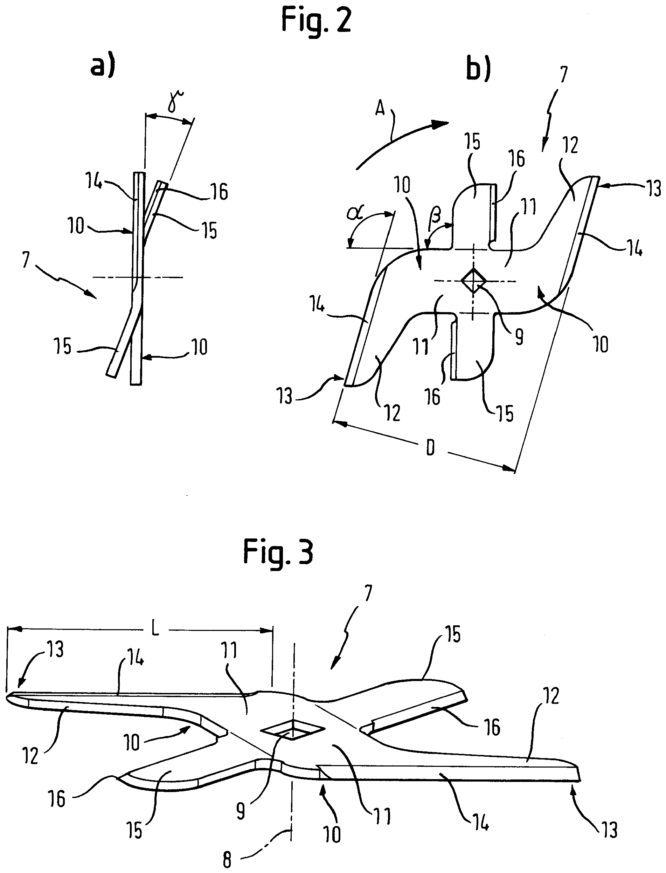

Wie aus den Figuren 2 und 3 ersichtlich, weist das Schneidmesser 7 eine zentrale, quadratische Aufnahme 9 für die Antriebswelle des Werkzeugs 5 auf. Von der die Mitte des Schneidmessers bildenden Aufnahme 9 aus erstrecken sich zwei erste Tragarme 10 einander gegenüberliegend weg. Die deckungsgleich ausgebildeten Tragarme 10 sind winkelförmig ausgeführt und bilden miteinander eine Z-förmige Anordnung. Sie bestehen jeweils aus einem inneren, radial nach außen weisenden Schenkel 11 und einem äußeren Schenkel 12, dessen radial außenliegende Kante 13 mit dem inneren Schenkel 11 einen Winkel α von etwa 110° einschließt.

Die geradlinig ausgebildeten Kanten 13 der beiden äußeren Schenkel 12 verlaufen zueinander parallel und bilden Messerschneiden 14 aus, deren Abstand D im Ausführungsbeispiel rund 24 mm beträgt. Die radial äußeren Schenkel 12 weisen jeweils eine Länge L von etwa 18 mm auf und sind damit deutlich länger als die radial inneren Schenkel 11 ausgeführt. Die Messerschneiden 14 bestehen, wie aus Fig. 3 ersichtlich, aus einer einfachen Anschrägung der Kanten 13 und sind so angeordnet, dass sie bei Drehung des Schneidmesser 7 in Richtung des Pfeils A durch das Bearbeitungsgut schneiden.

Das Schneidmesser 7 ist ferner mit einem Paar von zweiten Tragarmen 15 versehen, die sich von der Mitte des Schneidmessers 7 radial nach außen erstrecken. Die zweiten Tragarme 15 schließen mit den inneren Schenkeln 11 einen Winkel β von 90° ein und sind jeweils mit einer Schneidkante 16 ausgestattet, die bei Drehung des Schneidmessers 7 in Richtung des Pfeils A in das Bearbeitungsgut eindringend. Die zweiten Tragarme 15 sind, wie aus Fig. 2a ersichtlich, gegenüber der von den ersten Tragarmen 10 gebildeten Hauptebene des Schneidmessers 7 um einen Winkel χ von rund 20° geneigt anordnet, wobei einer der zweiten Tragarme 15 gegenüber der Hauptebene nach unten und der gegenüberliegende zweite Tragarm 15 gegenüber der Hauptebene nach oben geneigt ausgerichtet ist. Die radiale Erstreckung der zweiten Tragarme 15 entspricht im Ausführungsbeispiel etwa der Hälfte der radialen Erstreckung der ersten Tragarme 10. Da die Schneidkanten 16 im Wesentlichen dem Zerhacken des Bearbeitungsguts dienen, müssen sie nicht die gleiche Schärfe wie die Messerschneiden 14 aufweisen.

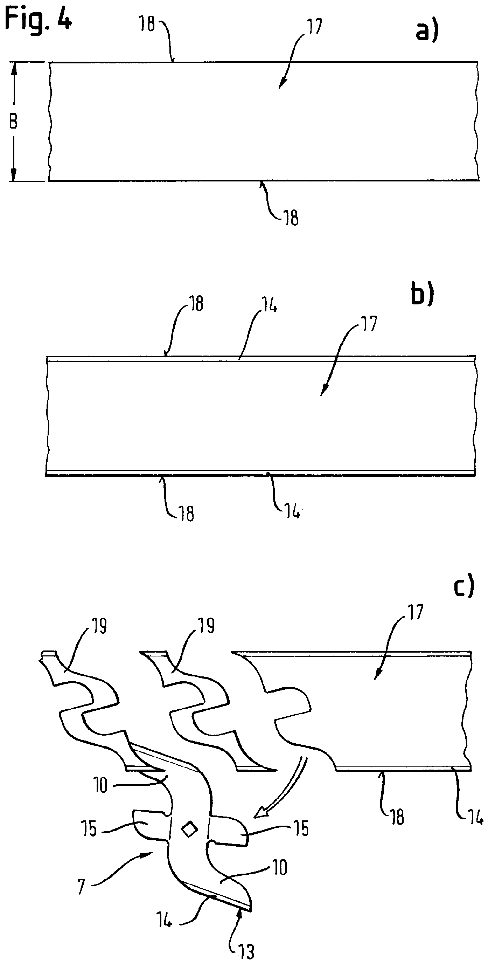

Bei der Herstellung des erfindungsgemäßen Schneidmessers 7 wird zunächst ein in Fig. 4a gezeigtes streifenförmiges Halbzeug 17 an seinen in Längsrichtung verlaufenden Kanten 18 durch Schleifen geschärft, wodurch sich Messerschneiden 14 ausbilden (Fig. 4b). Das Halbzeug 17 besteht im Ausführungsbeispiel aus einem Edelstahlblechs mit einer Dicke von 0,75 mm und weist eine Breite B auf, welche dem Abstand D des zu fertigenden Schneidmessers 7 entspricht.

Wie aus Fig. 4c ersichtlich, wird das Schneidmesser 7 nachfolgend durch Stanzen derart aus dem Halbzeug 17 getrennt, dass die mit den Messerschneiden 14 versehenen Kanten 18 des Halbzeugs 17 die Kanten 13 der ersten Tragarme 10 des Schneidmessers 7 ausbilden. Während des Stanzens werden darüber hinaus die zweiten Tragarme 15 gegenüber der Hauptebene gewinkelt und durch Verprägen mit den Schneidkanten 16 versehen. Infolge der im Wesentlichen Z-förmigen Gestalt der Schneidmesser 7 entstehen nur kleine, bereits voneinander getrennte Stanzrückstände 19, die problemlos gesammelt und dem Recycling zugeführt werden können.

### Bezugszeichenliste

- 1: Küchengerät
- 2: Stabmixer
- 3: Bedienelemente
- 4: Gehäuse
- 5: Werkzeug
- 6: Werkzeugkopf
- 7: Schneidmesser
- 8: Achse
- 9: Aufnahme
- 10: (erster) Tragarm
- 11: Schenkel (radial innen)
- 12: Schenkel (radial außen)
- 13: Kante (des Schenkels 12)
- 14: Messerschneide
- 15: (zweiter) Tragarm
- 16: Schneidkante
- 17: Halbzeug
- 18: Kante (des Halbzeugs)
- 19: Stanzrückstand

- A: Pfeil (Drehrichtung des Schneidmessers 7)
- B: Breite (des streifenförmigen Halbzeugs)
- D: Abstand (zwischen den Kanten 13)
- L: Länge (der äußeren Schenkel 12)

- α: Winkel (zwischen dem inneren Schenkel 11 und der Kante 13)
- β: Winkel (zwischen dem inneren Schenkel 11 und dem Tragarm 15)
- χ: Winkel (der Neigung der Tragarme 15 relativ zur Hauptebene)

## Patentansprüche

1. Verfahren zur Herstellung eines drehantreibbaren Schneidmessers eines Stabmixers, wobei mindestens eine Kante (18) eines Halbzeugs (17) messerartig geschärft und das Schneidmesser (7) nachfolgend derart aus dem Halbzeug (17) getrennt wird, dass zwei oder mehr mit derartigen Messerschneiden (14) versehene erste Tragarme (10) ausgebildet werden, die sich von der Mitte des Schneidmessers (7) weg erstrecken, so dass die betreffende Kante (18) des Halbzeugs (17) eine Messerschneide (14) des Schneidmessers (7) ausbildet, wobei das Schneidmesser (7) durch Stanzen aus dem Halbzeug (17) derart getrennt wird, dass zweite Tragarme (15) gegenüber der Hauptebene gewinkelt werden, und wobei das Schneidmesser (17) beim Trennen aus dem Halbzeug (17) zumindest bereichsweise verprägt wird, **dadurch gekennzeichnet, dass** beim Verprägen des Halbzeugs (17) Schneidkanten (16) für die zweiten Tragarme (15) erzeugt werden, wobei zur Herstellung des Schneidmessers (7) ein flächiges Halbzeug (17), welches streifenartig ausgebildet ist, verwendet wird, und dass die einander gegenüberliegenden, sich in Streifenlängsrichtung erstreckenden Kanten (18) des Halbzeugs (17) messerartig geschärft werden, wobei messerartige Schärfung durch Schleifen der Kanten (18) des Halbzeugs (17) erzeugt wird.

## Claims

1. Method for producing a cutting blade of a mixing wand, which cutting blade can be rotatably driven, wherein at least one edge (18) of a semi-finished product (17) is sharpened in the manner of a blade and the cutting blade (7) is subsequently separated from the semi-finished product (17) in such a way that two or more first supporting arms (10) provided with blade edges (14) of this kind are formed, which extend away from the centre of the cutting blade (7), so that the edge (18) in question of the semi-finished product (17) forms a blade edge (14) of the cutting blade (7), wherein the cutting blade (7) is separated from the semi-finished product (17) by way of punching in such a way that second supporting arms (15) are at an angle to the main plane, and wherein the cutting blade (17) is stamped, at least in regions, when separated from the semi-finished product (17), **characterised in that**,
when stamping the semi-finished product (17), cutting edges (16) for the second supporting arms (15) are generated, wherein a flat semi-finished product (17), which is embodied in the manner of a strip, is used to produce the cutting blade (7), and
the mutually opposite edges (18) of the semi-finished product (17) which extend in the longitudinal direction of the strip are sharpened in the manner of a blade, wherein blade-like sharpening is generated by grinding the edges (18) of the semi-finished product (17).

## Revendications

1. Procédé de fabrication d'un couteau pouvant être entraîné en rotation d'un mixeur plongeur, dans lequel au moins une arête (18) d'un demi-produit (17) est affûtée à la manière d'un couteau et le couteau (7) est séparé ensuite du demi-produit (17) de manière telle que deux ou plusieurs premiers bras de support (10) pourvus de tranchants de lame (14) sont formés, qui s'étendent en s'éloignant du centre du couteau (7), de façon telle que l'arête concernée (18) du demi-produit (17) forme un tranchant de lame (14) du couteau (7), dans lequel le couteau (7) est séparé par découpage à partir du demi-produit (17), de telle manière que des seconds bras de support (15) forment un angle par rapport au plan principal, et dans lequel le couteau (17) est matricé au moins en partie lors de la séparation à partir du demi-produit (17), **caractérisé en ce que** lors du matriçage du demi-produit (17), des arêtes de coupe (16) sont produites pour les seconds bras de support (15), dans lequel, pour la fabrication du couteau (7), un demi-produit plat (17) configuré en forme de bande est utilisé et **en ce que** les arêtes (18) du demi-produit (17) s'étendant dans la direction longitudinale de la bande à l'opposé l'une de l'autre sont affûtées à la manière d'un couteau, dans lequel l'affûtage à la manière d'un couteau est produit par meulage des arêtes (18) du demi-produit (17).
